# EUROPEAN PATENT SPECIFICATION

(11) **EP 2 147 542 B1**
(45) Date of publication and mention of the grant of the patent: **26.07.2017**
(21) Application number: 07822694.1
(22) Date of filing: 19.11.2007
(51) Int. Cl.: H04L 29/12, H04M 1/2745, G06F 17/30

(54) **ASSISTED LOOKUP OF CONTACTING IDENTIFIERS**
GESTÜTZTE ABFRAGE NACH KONTAKT-IDENTIFIERS
CONSULTATION ASSISTÉE D'IDENTIFIANTS DE CONTACT

(30) Priority: 24.05.2007 US 753362
(43) Date of publication of application: 27.01.2010
(73) Proprietor: Sony Mobile Communications Inc., Shinagawa-ku Tokyo 140-0002 (JP)
(72) Inventor: ANDREASSON, Markus, S-222 21 Lund (SE); ÅSTRAND, Per, S-222 20 Lund (SE); BACKLUND, Erik, S-253 73 Grantofta (SE)
(74) Representative: Awapatent AB
(86) International application number: PCT/EP2007/062485
(87) International publication number: WO 2008/141681

(56) References cited:
- EP-A- 1 718 088
- WO-A-2006/036206

## Description

### TECHNICAL FIELD OF THE INVENTION

The present invention relates to the field of contacting identifier lookup services for communication devices. More particularly the present invention relates to a method, communication device and computer program product for determining an identity associated with a contacting identifier received in a first communication device as well as to a method, personal communication device and computer program product for aiding in the determining of an identity associated with a contacting identifier received in a first communication device.

### DESCRIPTION OF RELATED ART

Contacting identifiers that are used for communication with devices can be of various types. They can be telephone numbers, e-mail addresses as well as URIs and URLs.

A user of a communication device can receive various types of messages and calls from other users and in this type of communication a contacting identifier is often shown. The identity of a user associated with this contacting identifier is however in many instances not directly obtainable, but can be located through looking in a contacts register of the communication device, if it is stored there.

However, the entries in these contact registers are normally made by the user, and therefore they are not complete. The user of a communication device may therefore wish to consult central lookup services that can provide information about such contacting identifiers he/she receives. These are however also not complete, for instance because some users wish to keep their identify secret from public sources. Such central lookup services may furthermore be illegal in some countries. There may furthermore be a cost associated with such a central lookup service.

This means that a user may be unable or hesitant to resort to such central lookup services for obtaining the information he/she desires.

WO 2006036206 A1 presents an initiating Internet Protocol (IP) communication in an IP communicating system based on databases of contact information.

At a first communication terminal, contact information is accessed from a first database of contact information that is within the first communication terminal. A second database of contact information is accessed, via the first communication terminal, which is separate from the first communication terminal and communicatively connected to the first communication terminal by a network. An IP communication is initiated from the first communication terminal based on contact information accessed in at least one of the first and second databases.

There is therefore a need for other ways to provide a lookup service for a user of a communication device.

### SUMMARY OF THE INVENTION

The present invention is directed towards providing a contacting identifier lookup service to a user of a communication device. Aspects and examples of the invention are set out in the claims. A first aspect of the present invention is directed towards a method for determining an identity associated with a contacting identifier received in a first communication device comprising the steps of:
investigating if there is an entry of the contacting identifier in a contacts register of the first communicating device, and
in case there is no such entry
locating, in the contacts register, communication devices in a set of communication devices providing a lookup service, which set includes at least one communication device and where at least one communication device is a personal communication device, sending a query regarding the contacting identifier to at least one second communication device of the set in order for the second communication device to investigate a contacts register of its own and locate the identity associated with the contacting identifier, and receiving data regarding the identity associated with the contacting identifier from said second communication device.

A second aspect of the present invention includes the features of the first aspect, further comprising the step of sending the query to a communication device associated with the contacting identifier and only sending the query to said at least one second communication device in case no answer is received from the communication device associated with the contacting identifier.

A third aspect of the present invention includes the features of the first aspect, wherein the set of communication devices includes a contacting identifier lookup server.

A fourth aspect of the present invention includes the features of the first aspect, wherein the query is sent to a server, which in turn routes the query to at least some of the communication devices in the set of communication devices.

A fifth aspect of the present invention includes the features of the first aspect, wherein the query is broadcast to at least some of the communication devices of the set.

A sixth aspect of the present invention includes the features of the first aspect, wherein one of the communication devices in the set is another communication device associated with the user of the first communication device.

A seventh aspect of the present invention includes the features of the first aspect, wherein there is a setting in the contacts register for each communication device in the set which may receive a query.

An eighth aspect of the present invention includes the features of the first aspect, wherein contacting identifiers used for reaching communication devices in the set are public IP addresses.

A ninth aspect of the present invention includes the features of the first aspect, wherein the communication device is a portable communication device.

A tenth aspect of the present invention is directed towards a communication device for determining an identity associated with a contacting identifier received in said communication device and comprising:
a communication unit,
a contacts register, and
a control unit arranged to
   investigate if there is an entry of the contacting identifier in said contacts register, and
   in case there is no such entry
   locate, in the contacts register, communication devices in a set of communication devices providing a lookup service, which set includes at least one communication device and where at least one communication device is a personal communication device,
   send a query regarding the contacting identifier to at least one second communication device of the set, in order for the second communication device to investigate a contacts register of its own and locate the identity associated with the contacting identifier, and
   receive data regarding the identity associated with the contacting identifier from said second communication device.

An eleventh aspect of the present invention includes the features of the tenth aspect, wherein the control unit is arranged to send the query to a communication device associated with the contacting identifier and to only send the query to said at least one second communication device in case no answer is received from the communication device associated with the contacting identifier.

A twelfth aspect of the present invention includes the features of the tenth aspect, wherein the set of communication devices includes a contacting identifier lookup server.

A thirteenth aspect of the present invention includes the features of the tenth aspect, wherein the query is sent to a server, which in turn routes the query to at least some of the communication devices in the set of communication devices.

A fourteenth aspect of the present invention includes the features of the tenth aspect, wherein the query is broadcast to at least some communication devices of the set.

A fifteenth aspect of the present invention includes the features of the tenth aspect, wherein one of the communication devices in the set is another communication device associated with the user of the first communication device.

A sixteenth aspect of the present invention includes the features of the tenth aspect, wherein there is a setting in the contacts register for each communication device in the set which may receive a query.

A seventeenth aspect of the present invention includes the features of the tenth aspect, wherein contacting identifiers used for reaching communication devices in the set are public IP addresses.

An eighteenth aspect of the present invention includes the features of the tenth aspect, wherein it is a portable communication device.

A nineteenth aspect of the present invention includes the features of the eighteenth aspect, wherein it is a cellular phone.

A twentieth aspect of the present invention is directed towards a computer program product for determining an identity associated with a contacting identifier received in a firstcommunication device and comprising:
computer program code, to make the first communication device execute, when said program code is loaded in the communication device,
investigate if there is an entry of the contacting identifier in a contacts register of the first communication device,
in case there is no such entry
locate, in the contacts register, communication devices in a set of communication devices providing a lookup service, which set includes at least one communication device and where at least one communication device is a personal communication device, send a query regarding the communication identifier to at least one second communication device of the set, in order for the second communication device to investigate a contacts register of its own and locate the identity associated with the contacting identifier, and
receive data regarding the identity associated with the contacting identifier from said second communication device.

A twenty-first aspect of the present invention is directed towards a method for aiding in the determining of an identity associated with a contacting identifier received in a first communication device comprising the steps of:
receiving, in a second personal communication device of a set of communication devices providing a lookup service, a query regarding the contacting identifier from the first communication device,
investigating an own contacts register, and
in case said contacting identifier is provided in the contacts register performing the further steps of
locating an identity associated with the contacting identifier, and
automatically sending data regarding the identity to the first communication device as a response to the query.

A twenty-second aspect of the present invention includes the features of the twenty-first aspect, further comprising the step determining if the first communication device is a device which should receive responses to such queries and only performing the steps of investigating the contacts register, locating an identity and automatically sending data regarding the identity if the first communication device should receive responses.

A twenty-third aspect of the present invention includes the features of the twenty-first aspect, wherein the query is received with a public IP address belonging to the second communication device.

A twenty-fourth aspect of the present invention includes the features of the twenty-first aspect, further comprising the step of sending the query to another communication device in the set in case the contacting identifier is not provided in the contacts register.

A twenty-fifth aspect of the present invention is directed towards a personal communication device in a set of communication devices providing a lookup service arranged for aiding in the determining of an identity associated with a contacting identifier received in a first communication device and comprising:
a communication unit,
a contacts register, and
a control unit arranged to
   receive a query regarding the contacting identifier from the first communication device,
   investigate an own contacts register, and
   being further arranged to, in case said contacting identifier is provided in the contacts register,
      locate an identity associated with the contacting identifier, and automatically send data regarding the identity to the first communication device as a response to the query.

A twenty-sixth aspect of the present invention includes the features of the twenty-fifth aspect, wherein the control unit is further arranged to determine if the first communication device is a device which should receive responses to such queries and only perform the investigating of the contacts register, locating of an identity and automatically sending of data regarding the identity if the first communication device should receive responses.

A twenty-seventh aspect of the present invention includes the features of the twenty-fifth aspect, wherein it is provided with a public IP address.

A twenty-eighth aspect of the present invention includes the features of the twenty-fifth aspect, wherein the control unit is further arranged to send the query to another communication device in the set in case the contacting identifier is not provided in the contacts register.

A twenty-ninth aspect of the present invention includes the features of the twenty-fifth aspect, wherein it is a portable communication device.

A thirtieth aspect of the present invention includes the features of the twenty-ninth aspect, wherein it is a cellular phone.

A thirty-first aspect of the present invention is directed towards a computer program product for aiding in the determining of an identity associated with a contacting identifier received in a first communication device and comprising:
computer program code, to make a personal communication device of a set of communication devices providing a lookup service execute, when said program code is loaded in the personal communication device,
receive a query regarding the contacting identifier from the first communication device, investigate an own contacts register, and
in case said contacting identifier is provided in the contacts register
   locate an identity associated with the contacting identifier, and automatically send data regarding the identity to the first communication device as a response to the query.

The invention has the following advantages. It allows a user of the first communication device to find out the identity of a contacting identifier in cases where it is not possible or when the user is reluctant to use a central lookup service provided via server. The lookup of the invention is provided with the assistance from at least one personal communication device having a lookup service. Such personal communication devices can often have better updated information than a central server. The invention also allows the first communication device to obtain a lookup function also in countries where server based lookup services are not allowed. The invention may furthermore also allow the user of the first communication device to avoid paying possible lookup fees. The present invention can be implemented in a communication device with limited additional functionality, since all of the hardware is essentially already there.

It should be emphasized that the term "comprises/comprising" when used in this specification is taken to specify the presence of stated features, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a first portable communication device communicating with other portable communication devices via a wireless wide area network,
fig. 2 shows a front view of a portable communication device in the form of a cellular phone,
fig. 3 shows a block schematic of the relevant parts of the cellular phone for providing functionality relating to the present invention,
fig. 4 schematically shows a contacts register with a number of entries regarding a number of contacts, where some have a lookup service setting.
fig. 5 shows a flow chart of a number of method steps performed in the first cellular phone in order to determine an identity associated with a contacting identifier received in a first communication device,
fig. 6 shows a flow chart of a number of corresponding method steps performed in one of the other cellular phones for aiding the first cellular phone in the determining of an identity associated with the contacting identifier, and
fig. 7 shows a CD ROM disc on which program code for executing methods according to the invention may be provided.

### DETAILED DESCRIPTION OF EMBODIMENTS

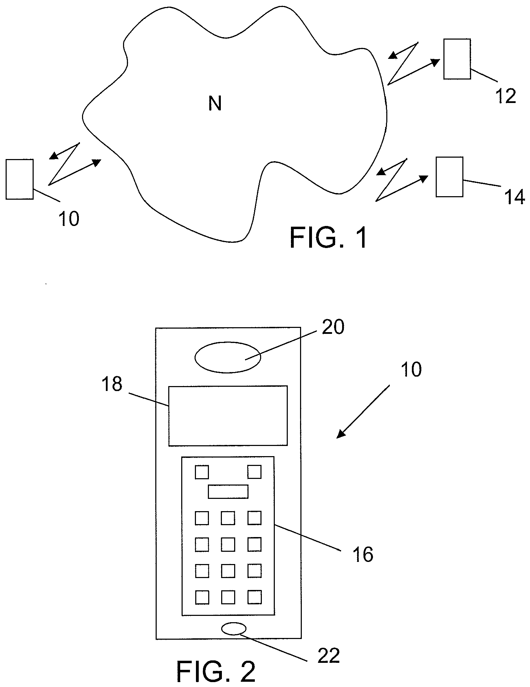

Fig. 1 shows a first communication device 10 communicating with a second and a third communication device 12 and 14 via a wide area network N. Here the devices are portable and the network is wireless, where this network may be a GSM network, a WCDMA network or an LTE network. It can be any wireless wide area network allowing the transmission of data. However the invention may be used in other types of networks than wireless networks and can therefore be used in relation to any type of wide area network.

A front view of a portable communication device 10 according to one embodiment of the present invention is shown in fig. 2. This portable communication device 10 includes the functionality that is provided for all portable communication devices according to the present invention. In a preferred embodiment the device is a cellular phone 10. The phone 10 has a display 18, a user input unit in the form of a keypad 16 including a number of keys, a speaker 20 and a microphone 22. The keypad 16 is used for entering information such as selecting of functions and responding to prompts and the display 18 is used for displaying prompts and information about functions to a user of the phone 10, while the speaker 20 is arranged to emit sound, like speech of a received phone call or music being played in the phone, alerting the user of events etc. and the microphone 36 is arranged to record sound. A cellular phone 10 is just one example of a device in which the invention can be implemented. The invention can for instance also be used in a PDA (personal digital assistant), a palm top computer or a lap top computer. It can also be used in a regular computer like a PC.

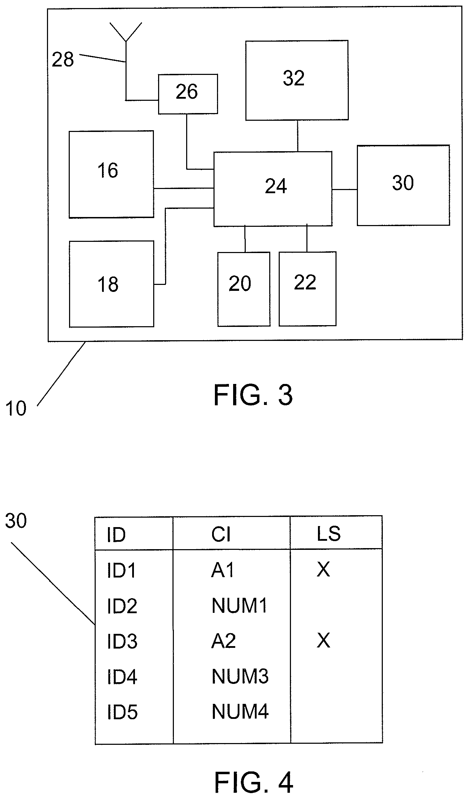

Fig. 3 shows a block schematic of a part of the interior of the cellular phone 10 that is relevant for the present invention. The phone 10 includes a control unit 24 connected to a radio communication unit 26 that in turn is connected to a first antenna 28 for communication in the wireless wide area network, a phone application handling unit 32 for handling the setting up and reception of phone calls and a contacts register 30 including data about contacts the user may want to get in touch with. The control unit 24 is furthermore connected to the keypad 16, the display 18, the speaker 20 and the microphone 22. It should be realised that the phone 10 may have several more application handling units, such as one or more message handling units. These are however not shown here in order to better describe the present invention.

Fig. 4 schematically shows a simplified contacts register 30 with a number of entries regarding a number of contacts, where some have a lookup service setting LS. In the contacts register 30 there is data regarding the identities of a number of contacts ID1, ID2, ID3, ID4 and ID5, where the identities are typically provided in the form of a name. With each identity ID there is associated at least one contacting identifier, which are here provided as identifiers A1, NUM1, A3, NUM2 and NUM3, where A denotes a public IP-address and NUM a phone number. These contacting identifiers are associated communication devices and are used for communication with these devices. For some of these contacting identifiers, there is a lookup service LS setting, and in this example the setting is made for two of the contacting identifiers A1 and A2, which are here associated with the phones 12 and 14 in fig. 1. It should here be realised that also the contacts ID1 and ID3 may have phone numbers stored in the contacts register and that the contacts ID2, ID4 and ID5 may have public IP addresses stored in the contacts register 30. The setting LS indicates that the communication devices associated with the corresponding identifiers A1 and A2 have a contacting identifier lookup service provided in them. Therefore these settings provide an indication of a set of communication devices that have a contacting identifier lookup service function. It should here be realised that the contacts register 30 may include additional information like place of business, home address of a contact etc, an image of the contact as well as more contacting identifiers associated with other communication devices of a contact. Such further contacting identifiers may then also have a lookup service setting. The contacts register 30 may also include data grouping together different sets of contacting identifiers according to different lookup service environments.

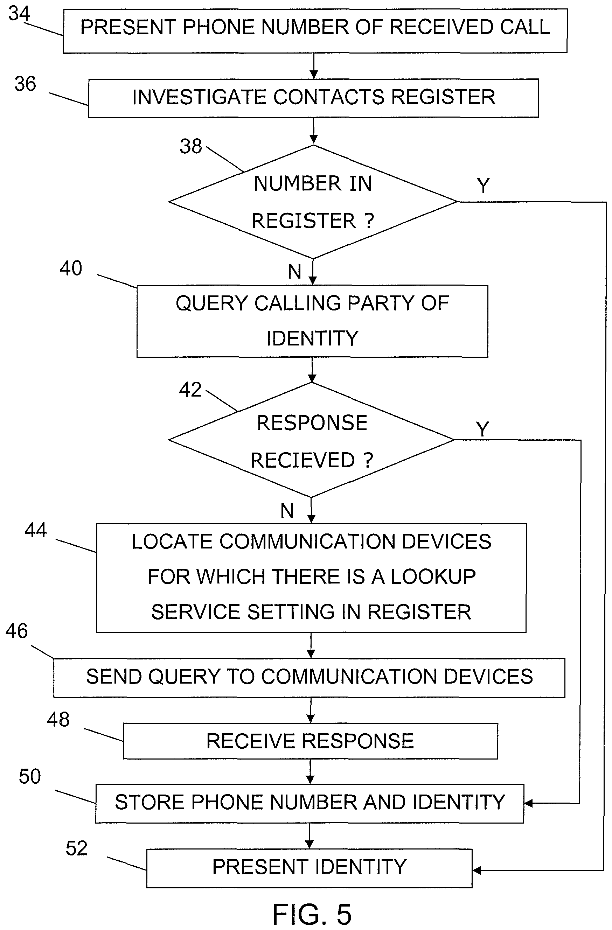

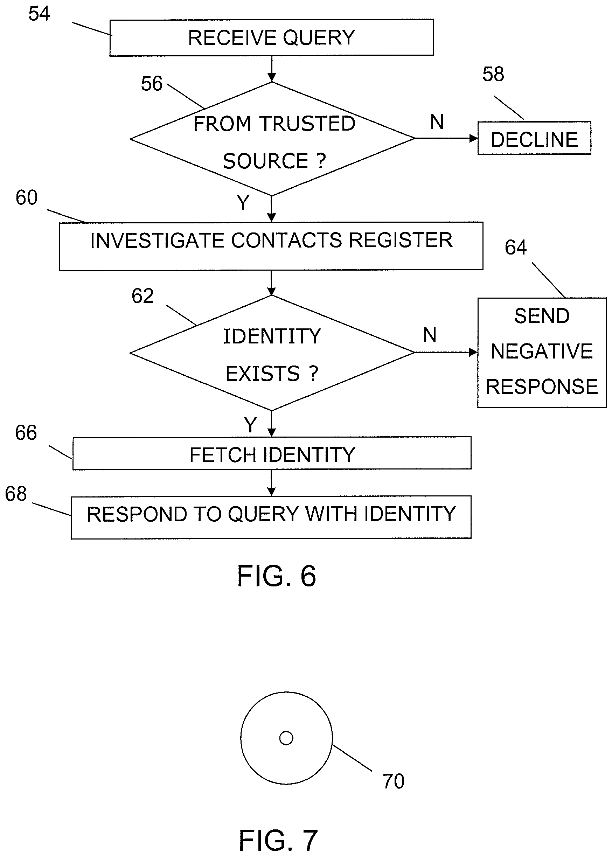

The functioning of the present invention according to the first embodiment will now be described for a contacting identifier in the form of a telephone number of a calling party, i.e. of a party calling the first phone 10. The following description of the first embodiment will here be made with reference to the previously described fig. 1 - 4, as well as to fig. 5, which shows a flow chart of a number of method steps performed in the first cellular phone 10 in order to determine an identity associated with a contacting identifier received in this first phone 10, and to fig. 6, which shows a flow chart of a number of corresponding method steps performed in one of the other cellular phones 12 for aiding the first cellular phone in the determining of an identity associated with a contacting identifier.

According to this first embodiment of the invention, the first phone 10 receives a call via the network N. Signalling information including the contacting identifier of the call, which in the case of telephone calls is a so-called A-number or the phone number of the calling party, is then received by the communication unit 26 via the antenna 28 and forwarded to the control unit 24. The signalling information may be provided in a data packet having a source address associated with the communication device of the calling party. The control unit 24 then forwards the signalling information to the call handling unit 32, which alerts the call via the speaker 20. The control unit 24 also presents the phone number on the display 18, step 34. Thereafter the control unit 24 investigates the contacts register 30, step 36, in order to find out if the phone number is associated with the identity of a contact in the contacts register 30. If the number exists in the register, the control unit 24 orders the display 18 to present the name of the contact, i.e. the identity, step 52. However, if there is no such entry, step 38, the control unit 24 orders the communication unit 26 to send a query regarding the identity to the calling party, step 40. The query is normally sent in a data packet and that has a lookup function setting. This may be a flag or some other data indicating that the query is a query regarding a contacting identifier that is to be investigated. The query may here be sent in a data packet addressed to the source address of the previously received signalling information packet. If the communication device of the calling party is equipped with a look up function associated with its own contacts register, this device may now itself send the data about the identity of the calling party to the first phone 10, if this is allowed. If a positive response is received by the control unit 24 via the communication unit 26, step 42, the control unit 24 then stores the received phone number and identity in the contacts register 30, step 50, and then goes on and presents the identity, step 52.

If however no response or a negative response is received, step 42, the control unit 24 goes on and locates contacting identifiers of communication devices in the contacts register 30, for instance public IP addresses, for which a lookup function setting exist, step 44, i.e. it locates the set of identifiers A1 and A2 for which a lookup function is provided in the corresponding communication devices. In this way the control unit 24 indirectly locates the set of communication devices that provide the lookup service via these connecting identifiers. As an example A1 and A2 may here be selected. The control unit 24 then orders the communication unit 26 to send a query regarding the identity to one or more communication devices that are associated with these contacting identifiers, step 46, i.e. to the contacts of the contacts register 30 for which such a setting exists. The query is thus sent to at least the second communication device 12 in the set. At least one of the communication devices in the set is furthermore a personal communication device, i.e. a communication device that is normally associated with a single user, such as a cellular phone or a PC. The query may here be sent as a separate message to each communication device of the set. However the query may also be broadcast to all these communication devices. Here the query is sent to the phones 12 and 14 using their public IP addresses A1 and A2. The query is preferably sent as a data packet that has a lookup function setting. Thereafter the control unit 24 awaits a response and when this is received via the communication unit 26, step 48, and this response includes the phone number of the calling party, the control unit 24 then stores the phone number and identity in the contacts register 30 and thereafter goes on and presents the identity, step 52.

It should here be realised that the received phone call can be processed in normal fashion at the same time, i.e. the user may select to answer the call. It should also be realised that the phone number need not be stored in the contacts register, but this may be optional or may be performed after asking the user of the first communication device. The presenting of the identity may likewise be omitted. In this case it is possible to only store the received information in the contacts register 30.

A communication device of the above mentioned set now receives the query, for instance the second cellular phone 12, via its own communication unit 24 and forwards it to the control unit 24 of this device 12 based on the lookup function setting of the packet that includes the query. The control unit 24 may here have a list of contacting identifiers for which it is allowed to provide a lookup service. This list may with advantage be provided as a setting in the contacts register, for instance a setting like the setting described in relation to fig. 4 above. If the query is not from such a device, i.e. not from a trusted source, step 56, the query is declined, step 58. However, if the query is from a trusted source, step 56, the control unit 24 goes on and investigates the contacts register 30, step 60, regarding the contacting identifier of the query. In case it does not succeed in finding the contacting identifier in the contacts register 30, the control unit 24 orders the communication unit 26 to send a negative response, step 64, while if it succeeds in finding it, step 62, data indicating an identity associated with the contacting identifier is fetched, step 66, and the control unit 24 then automatically sends a response to the query with data concerning this identity. This response may be sent as a data packet. It is here possible that more than the identity is sent. All the data regarding a contact may be sent. The data may be sent as a so-called V-card.

In this way it is possible for the user of the first communication device to find out the identity of a received contacting identifier in cases where it is not possible or when the user is reluctant to use a central lookup service provided via a server. Instead the lookup is made with the assistance from communication devices having a lookup service according to the present invention. These can often have better updated information than a central server. Some people do also not allow their contacting identifiers be searched on a central server. This lookup service is furthermore scalable compared to a server solution. It thus also allows the first phone to obtain a lookup function also in countries where server based lookup services are not allowed. This may furthermore also allow the user of the first phone to avoid paying any lookup fees. The present invention can be implemented in a communication device with limited additional functionality, since all of the hardware is essentially already there. It can be implemented by only including some additional software.

The control unit in communication devices according to the present invention is preferably provided in the form of one or more processors with corresponding memory containing the program code for performing its function, whereas the contacts register is provided as a memory module or a part of a memory module, which may be a RAM, ROM or a flash memory. Normally the communication units are provided as separate hardware modules, for instance in the form of ASIC circuits. The different hardware units of the phone may furthermore be connected using a data bus.

The program code mentioned above can also be provided on one or more computer program products such as a CD ROM disc 70 as depicted in fig. 7, which will perform the functioning of the control unit when being loaded into a communication device having suitable processing capabilities. Naturally other types of products can be provided for this, like for instance a removable memory like a memory stick. The computer program product can also be provided as software, which is downloaded remotely from a server either outside or inside the network or be downloaded via a computer like a PC to which the communication device if it is a phone is temporarily connected.

There are a number of further variations that can be made to the present invention in addition to those already mentioned. The invention is not limited to received calls. It can also be applied for instance in relation to received messages, such as e-mails, MMS and SMS messages. The invention is furthermore not limited to the time of reception of a call or message. It can be used on an identifier that previously exists in the first communication device, such as a previously missed call etc. As mentioned above the contacting identifier is not limited to a phone number, but may for instance be a SIP address, an e-mail address, an URI or a URL. It is furthermore possible to provide different sets of environments, where the user of the first communication device may select which environment in which to send a query. Here an environment may be an office environment, a home environment, a friends environment etc. It should furthermore be realised that the calling party need not be queried. It is also possible that one of the contacts in set having the lookup service may be a lookup server where several contacting identifiers are stored. One communication device in the set may be another device of the user of the first communication device. If for instance the first communication device is a cellular phone of the user, this other device may be his/her computer. If the communication devices in the above mentioned set do not have public IP addresses the query may be sent to a server in the network, which locates addresses for the communication devices in the set and routes the query to them. The contacting identifier lookup is furthermore not limited to wide area networks, wireless or fixed, but can be provided through any type of peer-to-peer communication. Queries and responses to queries may therefore be sent and received using short range communication, like Bluetooth or via a local wireless network like a LAN or WLAN network.

Although the present invention has been described in connection with specific embodiments, it is not intended to be limited to the specific form set forth herein. Rather, the scope of the present invention is limited only by the accompanying claims.

## Claims

1. Method for determining an identity associated with a contacting identifier received in a first communication device (10), comprising the steps of:
*investigating* (36) if there is an entry of the contacting identifier in a contacts register (30) of the first communicating device (10), and in case there is no such entry (38):
- sending (40) a query to a communication device associated with the contacting identifier,
- in case no answer is received (42) from the communication device associated with the contacting identifier, locating (44), in the contacts register, communication devices (12, 14) in a set of communication devices which includes a contacting identifier lookup server providing a lookup service, and which set further includes at least one personal communication device,
- *sending* (46), only in case no answer is received (42) from the communication device associated with the contacting identifier, a query regarding the contacting identifier to the server, which in turn broadcasts the query to at least some of the communication devices (12, 14) in the set of communication devices, in order for the communication devices (12, 14) to investigate a contacts register of its own and locate the identity associated with the contacting identifier, and
- receiving (48) data regarding the identity associated with the contacting identifier from at least some communication device (12, 14) in the set of communication devices.

2. Method according to claim 1, wherein one of the communication devices in the set is another communication device associated with the user of the first communication device (10).

3. Method according to any of claim 1 or claim 2, wherein there is a setting in the contacts register for each communication device (12, 14) in the set which may receive a query.

4. Method according to any of the claims 1-3, wherein contacting identifiers used for reaching communication devices (12, 14) in the set are public IP addresses.

5. Method according to any of claims 1-4, wherein the communication device is a portable communication device.

6. Communication system for determining an identity associated with a contacting identifier received in a communication device (10), the communication system comprising the communication device (10) and communication devices (12, 14) in a set of communication devices which includes a contacting identifier lookup server providing a lookup service, the communication device (10) comprising:
a communication unit (26),
a contacts register (30), and
a control unit (24) arranged to
investigate if there is an entry of the contacting identifier in said contacts register (30), and
in case there is no such entry:
- send (40) a query to a communication device associated with the contacting identifier,
- in case no answer is received (42) from the communication device associated with the contacting identifier,
locate, in the contacts register (30), communication devices (12, 14) in a set of communication devices which includes a contacting identifier lookup server providing a lookup service, and which set further includes at least one personal communication device,
- send only in case no answer is received (42) from the communication device associated with the contacting identifier, a query regarding the contacting identifier to a server, which in turn broadcast the query to at least some of the communication devices (12, 14) in the set of communication devices in order for each respective communication device (12, 14) to investigate a contacts register of its own and locate the identity associated with the contacting identifier, and
- receive data regarding the identity associated with the contacting identifier from at least some communication device (12, 14) in the set of communication devices.

7. Communication system according to claim 6, wherein one of the communication devices (12, 14) in the set is another communication device associated with the user of the first communication device (10).

8. Communication system according to any of the claims 6-7, wherein there is a setting in the contacts register for each communication device (12, 14) in the set which may receive a query.

9. Communication system according to any of the claims 6-8, wherein contacting identifiers used for reaching communication devices (12, 14) in the set are public IP addresses.

10. Communication system according to any of claims 6-9, wherein the communication device (10) is a portable communication device.

11. Communication system according to claim 10, wherein the communication device (10) is a cellular phone.

## Patentansprüche

1. Verfahren zur Bestimmung einer Identität, die mit einem Kontakt-Identifier verknüpft ist, der in einer ersten Kommunikationsvorrichtung (10) erhalten wird, umfassend folgende Schritte:
Untersuchen (36), ob eine Eingabe des Kontakt-Identifiers in einem Kontaktregister (30) der ersten Kommunikationsvorrichtung (10) vorhanden ist,
und, für den Fall, dass keine solche Eingabe vorhanden ist (38):
- Senden (40) einer Anfrage zu einer Kommunikationsvorrichtung, die mit dem Kontakt-Identifier verknüpft ist,
- für den Fall, dass keine Antwort von der Kommunikationsvorrichtung erhalten wird (42), die mit dem Kontakt-Identifier verknüpft ist, Lokalisieren (44) in dem Kontaktregister von Kommunikationsvorrichtungen (12, 14) in einer Gruppe von Kommunikationsvorrichtungen, welche einen Kontakt-Identifier-Lookup-Server enthält, der einen Abfragedienst bereitstellt, und wobei die Gruppe ferner mindestens eine persönliche Kommunikationsvorrichtung enthält,
- Senden (46) nur für den Fall, dass keine Antwort von der Kommunikationsvorrichtung erhalten wird (42), die mit dem Kontakt-Identifier verknüpft ist, einer Anfrage bezüglich des Kontakt-Identifiers zu dem Server, welcher wiederum die Anfrage zu mindestens irgendeiner der Kommunikationsvorrichtungen (12, 14) in der Gruppe von Kommunikationsvorrichtungen überträgt, damit die Kommunikationsvorrichtungen (12, 14) ein eigenes Kontaktregister untersuchen und die mit dem Kontakt-Identifier verknüpfte Identität lokalisieren, und
- Erhalten (48) von Daten bezüglich der Identität, die mit dem Kontakt-Identifier verknüpft ist, von mindestens irgendeiner Kommunikationsvorrichtung (12, 14) in der Gruppe von Kommunikationsvorrichtungen.

2. Verfahren nach Anspruch 1, wobei eine der Kommunikationsvorrichtungen in der Gruppe eine andere Kommunikationsvorrichtung ist, die mit dem Benutzer der ersten Kommunikationsvorrichtung (10) verknüpft ist.

3. Verfahren nach einem der Ansprüche 1 oder 2, wobei eine Einstellung in dem Kontaktregister für jede Kommunikationsvorrichtung (12, 14) in der Gruppe vorhanden ist, welche eine Anfrage erhalten kann.

4. Verfahren nach einem der Ansprüche 1 - 3, wobei die Kontakt-Identifier, die zum Erreichen der Kommunikationsvorrichtungen (12, 14) in der Gruppe verwendet werden, öffentliche IP-Adressen sind.

5. Verfahren nach einem der Ansprüche 1 - 4, wobei die Kommunikationsvorrichtung eine tragbare Kommunikationsvorrichtung ist.

6. Kommunikationssystem zur Bestimmung einer Identität, die mit einem Kontakt-Identifier verknüpft ist, der in einer Kommunikationsvorrichtung (10) erhalten wird, wobei das Kommunikationssystem die Kommunikationsvorrichtung (10) und die Kommunikationsvorrichtungen (12, 14) in einer Gruppe von Kommunikationsvorrichtungen umfasst, welche einen Kontakt-Identifier-Lookup-Server enthält, der einen Abfragedienst bereitstellt, wobei die Kommunikationsvorrichtung (10) Folgendes umfasst:
eine Kommunikationseinheit (26),
ein Kontaktregister (30), und
eine Steuereinheit (24), die eingerichtet ist, um
zu untersuchen, ob ein Eintrag des Kontakt-Identifiers in dem Kontaktregister (30) vorhanden ist, und,
für den Fall, dass kein solcher Eintrag vorhanden ist:
- eine Anfrage zu einer Kommunikationsvorrichtung, die mit dem Kontakt-Identifier verknüpft ist, zu senden (40),
- für den Fall, dass keine Antwort von der Kommunikationsvorrichtung erhalten wird (42), die mit dem Kontakt-Identifier verknüpft ist,
in dem Kontaktregister (30) Kommunikationsvorrichtungen (12, 14) in einer Gruppe von Kommunikationsvorrichtungen zu lokalisieren, welche einen Kontakt-Identifier-Abfrage-Server enthält, der einen Abfragedienst bereitstellt, und wobei die Gruppe ferner mindestens eine persönliche Kommunikationsvorrichtung enthält,
- nur für den Fall, dass keine Antwort von der Kommunikationsvorrichtung erhalten wird (42), die mit dem Kontakt-Identifier verknüpft ist, eine Anfrage bezüglich des Kontakt-Identifiers zu einem Server zu senden, welcher wiederum die Anfrage zu mindestens irgendeiner der Kommunikationsvorrichtungen (12, 14) in der Gruppe von Kommunikationsvorrichtungen überträgt, damit jede jeweilige Kommunikationsvorrichtung (12, 14) ein eigenes Kontaktregister untersucht und die mit dem Kontakt-Identifier verknüpfte Identität lokalisiert, und
- Daten bezüglich der Identität, die mit dem Kontakt-Identifier verknüpft ist, von mindestens irgendeiner Kommunikationsvorrichtung (12, 14) in der Gruppe von Kommunikationsvorrichtungen zu erhalten.

7. Kommunikationssystem nach Anspruch 6, wobei eine der Kommunikationsvorrichtungen (12, 14) in der Gruppe eine andere Kommunikationsvorrichtung ist, die mit dem Benutzer der ersten Kommunikationsvorrichtung (10) verknüpft ist.

8. Kommunikationssystem nach einem der Ansprüche 6 - 7, wobei eine Einstellung in dem Kontaktregister für jede Kommunikationsvorrichtung (12, 14) in der Gruppe vorhanden ist, welche eine Anfrage erhalten kann.

9. Kommunikationssystem nach einem der Ansprüche 6 - 8, wobei die Kontakt-Identifier, die zum Erreichen der Kommunikationsvorrichtungen (12, 14) in der Gruppe verwendet werden, öffentliche IP-Adressen sind.

10. Kommunikationssystem nach einem der Ansprüche 6 - 9, wobei die Kommunikationsvorrichtung (10) eine tragbare Kommunikationsvorrichtung ist.

11. Kommunikationssystem nach Anspruch 10, wobei die Kommunikationsvorrichtung (10) ein Mobiltelefon ist.

## Revendications

1. rocédé pour déterminer une identité associée à un identifiant de contact reçu dans un premier dispositif de communication (10), comprenant les étapes consistant à :
examiner (36) si il y a une entrée de l'identifiant de contact dans un registre de contacts (30) du premier dispositif de communication (10), et au cas où il n'y a pas une telle entrée (38) :
- envoyer (40) une requête à un dispositif de communication associé à l'identifiant de contact,
- au cas où aucune réponse n'est reçue (42) depuis le dispositif de communication associé à l'identifiant de contact, localiser (44), dans le registre de contacts, des dispositifs de communication (12,14) dans un ensemble de dispositifs de communication qui incluent un serveur de recherche d'identifiant de contact fournissant un service de recherche, et lequel ensemble inclut en outre au moins un dispositif de communication personnel,
- envoyer (46), seulement au cas où aucune réponse n'est reçue (42) depuis le dispositif de communication associé à l'identifiant de contact, une requête concernant l'identifiant de contact au serveur, qui à son tour diffuse la requête vers au moins certains des dispositifs de communication (12,14) dans l'ensemble de dispositifs de communication, de sorte que les dispositifs de communication (12,14) examinent leurs propres registres de contacts et localisent l'identité associé à l'identifiant de contact, et
- recevoir (48) des données concernant l'identité associée à l'identifiant de contact depuis au moins un dispositif de communication (12,14) dans l'ensemble de dispositifs de communication.

2. Procédé selon la revendication 1, dans lequel un des dispositifs de communication dans l'ensemble est un autre dispositif de communication associé à l'utilisateur du premier dispositif de communication (10).

3. Procédé selon une quelconque des revendications 1 ou 2, dans lequel il y a un réglage dans le registre de contacts pour chaque dispositif de communication (12,14) dans l'ensemble qui peut recevoir une requête.

4. Procédé selon une quelconque des revendications 1-3, dans lequel les identifiants de contact utilisés pour atteindre les dispositifs de communication (12,14) dans l'ensemble sont des adresses IP publiques.

5. Procédé selon une quelconque des revendications 1-4, dans lequel le dispositif de communication est un dispositif de communication portable.

6. Système de communication pour déterminer une identité associée à un identifiant de contact reçu dans un dispositif de communication (10), le système de communication comprenant le dispositif de communication (10) et des dispositifs de communication (12,14) dans un ensemble de dispositifs de communication qui incluent un serveur de recherche d'identifiant de contact fournissant un service de recherche, le dispositif de communication (10) comprenant :
une unité de communication (26),
un registre de contacts (30) et
une unité de commande (24) agencée pour :
examiner si il y a une entrée de l'identifiant de contact dans un registre de contacts (30), et au cas où il n'y a pas une telle entrée:
- envoyer (40) une requête à un dispositif de communication associé à l'identifiant de contact,
- au cas où aucune réponse n'est reçue (42) depuis le dispositif de communication associé à l'identifiant de contact, localiser (44), dans le registre de contacts, des dispositifs de communication (12,14) dans un ensemble de dispositifs de communication qui incluent un serveur de recherche d'identifiant de contact fournissant un service de recherche, et lequel ensemble inclut en outre au moins un dispositif de communication personnel,
- envoyer, seulement au cas où aucune réponse n'est reçue (42) depuis le dispositif de communication associé à l'identifiant de contact, une requête concernant l'identifiant de contact au serveur, qui à son tour diffuse la requête vers au moins certains des dispositifs de communication (12,14) dans l'ensemble de dispositifs de communication, de sorte que les dispositifs de communication (12,14) examinent leurs propres registres de contacts et localisent l'identité associé à l'identifiant de contact, et
- recevoir des données concernant l'identité associée à l'identifiant de contact depuis au moins un dispositif de communication (12,14) dans l'ensemble de dispositifs de communication.

7. Système de communication selon la revendication 6, dans lequel un des dispositifs de communication (12,14) dans l'ensemble est un autre dispositif de communication associé à l'utilisateur du premier dispositif de communication (10).

8. Système de communication selon une quelconque des revendications 6-7, dans lequel il y a un réglage dans le registre de contacts pour chaque dispositif de communication (12,14) dans l'ensemble qui peut recevoir une requête.

9. Système de communication selon une quelconque des revendications 6-8, dans lequel les identifiants de contact utilisés pour atteindre les dispositifs de communication (12,14) dans l'ensemble sont des adresses IP publiques.

10. Système de communication selon une quelconque des revendications 6-9, dans lequel le dispositif de communication (10) est un dispositif de communication portable.

11. Système de communication selon la revendication 10, dans lequel le dispositif de communication (10) est un téléphone cellulaire.
